# EUROPÄISCHE PATENTSCHRIFT

(11) **EP 2 498 270 B1**
(45) Veröffentlichungstag und Bekanntmachung des Hinweises auf die Patenterteilung: **04.05.2016**
(21) Anmeldenummer: 12001619.1
(22) Anmeldetag: 08.03.2012
(51) Int. Cl.: H01H 47/00

(54) **Sicherheitsrelais und sicherheitsgerichtetes Kommunikationssystem**
Security relay and security-oriented communication system
Relais de sécurité et système de communication orienté vers la sécurité

(30) Priorität: 11.03.2011 DE 102011013720
(43) Veröffentlichungstag der Anmeldung: 12.09.2012
(73) Patentinhaber: Phoenix Contact GmbH & Co. KG, 32825 Blomberg (DE)
(72) Erfinder: Boll, Wolfgang, 71789 Hameln (DE); Eilers, Markus, 31812 Bad Pyrmont (DE)
(74) Vertreter: Kampfenkel, Klaus

(56) Entgegenhaltungen:
- EP-A1- 2 079 141
- EP-A1- 2 149 895
- DE-U1-202009 007 866

## Beschreibung

Die vorliegende Erfindung betrifft ein sicherheitsgerichtetes Kommunikationssystem insbesondere für die Automatisierungstechnik sowie ein Sicherheitsrelais zum sicheren Einschalten von Lasten.

In der Automatisierungstechnik werden Aktoren oftmals durch digitale Ausgänge einer Steuereinrichtung zum Beispiel einer speicherprogrammierbaren Steuerung (SPS) gesteuert. Neben der Steuerung von automatisierten Prozessen werden zunehmend auch sicherheitsgerichtete Funktionen durch Steuereinrichtungen gesteuert und durch entsprechende Aktoren ausgeführt. Zur Abwendung von Schaden an Mensch, Maschine und Umwelt gelten für solche sicherheitsgerichteten Funktionen erhöhte Anforderungen bezüglich ihrer Funktionsfähigkeit, d.h. insbesondere in Bezug auf die Zuverlässigkeit und Verfügbarkeit der ausführenden Steuerungen und der angesteuerten Aktoren.

Die digitalen Signalausgänge einer sicherheitsgerichteten Steuereinrichtung können über eine Überwachungseinrichtung verfügen, mit der ein jeweiliger Signalsausgangsstromkreis auf Fehler in der Verdrahtung sowie auf Störungen im Eingangsbereich eines angeschlossenen Aktors hin überwacht werden kann.

Insbesondere beim Betrieb von Aktoren, die mittels elektrischer Energie versorgt werden müssen, wird der Signalausgangsstromkreis der digitalen Signalsausgänge einer Steuereinrichtung vom jeweiligen Laststromkreis des Aktors oftmals galvanisch getrennt, da die digitalen Signalausgänge in der Regel nur begrenzte Ströme treiben können. Die Entkopplung des Signalausgangsstromkreises und des Laststromkreisen erfolgt zum Beispiel über Koppelrelais, die in Abhängigkeit eines Eingangssignals, das von den jeweiligen digitalen Signalausgängen bereitgestellt wird, zumindest einen Laststromkreis schalten können. Die Schaltelemente bzw. die Relaiskontakte im Laststromkreis des Koppelrelais können sowohl als Öffner als auch in Form eines Schließers ausgeführt sein, so dass eine invertierende oder nicht invertierende Schaltfunktion mit den Koppelrelais realisierbar ist.

Entsprechende Koppelrelais, die den Anforderungen für einen Betrieb an einer sicherheitsgerichtete Steuereinrichtung entsprechen, sind unter der Bezeichnung Sicherheitsrelais bekannt. Ein zum sicheren Einschalten eines Aktors geeignetes Sicherheitsrelais umfasst je nach Sicherheitsanforderung bis zu drei parallel geschaltete Schaltelemente. Die Schaltelemente werden durch eine Steuerlogik des Sicherheitsrelais in Abhängigkeit eine durch die digitalen Signalausgängen der Steuereinrichtung bereitgestellten Eingangssignals redundant angesteuert, so dass der Laststromkreis über die Schaltelemente redundant einschaltbar ist.

Ein wesentlicher Nachteil bei der Entkopplung zwischen Signalausgangsstromkreis und Laststromkreis durch ein Sicherheitsrelais ist darin zu sehen, dass die Überwachungseinrichtung einer sicherheitsgerichteten Steuereinrichtung nur den Eingangsstromkreis des Sicherheitsrelais überwachen kann. Mögliche Fehler im Laststromkreis z.B. Verdrahtungsfehler sowie Fehler innerhalb des Sicherheitsrelais z.B. in Form eines Ausfall der internen Steuerlogik oder einzelner Schaltelemente können durch die Überwachungseinrichtung der digitalen Signalausgänge einer sicherheitsgerichteten Steuereinrichtung hingegen nicht erkannt werden.

Aus der EP 2 149 895 A1 ist eine Leistungs- und Steuereinheit bekannt, die mit einer Einrichtung, welche im Nieder- oder Mittelspannungsbereich betrieben wird und welche mit einem Sicherheitsrelais verbunden ist, welches eine Überwachungseinrichtung für einen Betätigungskreis aufweist. Die Leistungs- und Steuereinheit weist einen digitalen Eingang auf, der mit dem Sicherheitsrelais verbunden ist. Weiterhin weist die Leistungs- und Steuereinheit eine Fehlererkennungseinrichtung auf, die ebenfalls mit dem digitalen Eingang verbunden ist. Ferner ist eine Freigabeeinrichtung vorgesehen, die mit der Fehlererkennungseinrichtung und der Niederspannungs- oder Mittelspannungseinrichtung verbunden ist.

Aus der DE 20 2009 007 866 U1 ist ein Sicherheitsrelaismodul zum sicheren Abschalten von Steuerstromkreisen bekannt, welche zwei unterschiedliche, zwangsgeführte Sicherheitsrelais mit je insgesamt wenigstens zwei redundanten Schließerkontakten aufweist.

In der EP 2 079 141 A1 wird eine Anschalteinrichtung für einen Elektromotor mit integrierter Sicherheitstechnik beschrieben. Die Anschalteinrichtung weist eine Steuerschaltung, eine sicherheitsgerichtete Schaltung sowie eine sichere Schalteinrichtung auf, wobei der sicherheitsgerichteten Schaltung ein sicherheitsgerichtetes Abschaltsignal zuführbar ist, sodass die sicherheitsgerichtete Schaltung die sichere Schalteinrichtung sicher öffnen kann.

Der Erfindung liegt daher die Aufgabe zugrunde, eine sicherheitsgerichtete Überwachung von Laststromkreis und Sicherheitsrelais durch die Überwachungseinrichtung am digitalen Signalausgang einer sicherheitsgereichten Steuereinrichtung bereitzustellen.

Zur Lösung dieser Aufgabe schlägt die vorliegende Erfindung ein sicherheitsgerichtetes Kommunikationssystem sowie ein Sicherheitsrelais gemäß den unabhängigen Patentansprüchen vor. Bevorzugte und vorteilhafte Ausgestaltungen sind Gegenstand der Unteransprüche.

Das sicherheitsgerichtetes Kommunikationssystem umfasst wenigstens ein Sicherheitsrelais und eine Steuereinrichtung. Das Sicherheitsrelais weist wenigstens zwei Signaleingänge auf, die jeweils an einem digitalen Signalausgang der Steuereinrichtung angeschlossen sind und somit den Eingangssignalstromkreis des Sicherheitsrelais bilden.

Für den Eingangssignalstromkreis kann beispielsweise an einem ersten Anschluss eines digitalen Signalausgangs eine positive Spannung eines Ansteuersignals bereitgestellt werden, das abhängig vom Zustand der Steuereinrichtung ein- bzw. ausschaltbar ist. Das entsprechende Bezugspotential kann durch einen zweiten Anschluss des digitalen Signalausgangs bereitgestellt werden. Der erste Anschluss des digitalen Signalausgangs kann mit einer internen Spannungsquelle ausgestattet sein oder zumindest mit einer Spannungsquelle elektrisch verbunden sein, die zum Treiben des zwischen dem ersten und zweiten Anschluss des digitalen Signalsausgangs angeschlossenen Sicherheitsrelais ausreichenden Strom ausgebildet ist.

Die Steuereinrichtung ist zum Überwachen des Eingangssignalstromkreises ausgebildet.

Die Überwachung des Eingangssignalstromkreises kann über eine interne Überwachungseinrichtung der Steuereinrichtung erfolgen, die beispielsweise dem ersten Anschluss des digitalen Signalausgangs zugeordnet ist. Das Sicherheitsrelais stellt für den Eingangssignalsstromkreis eine bestimmte Impedanz dar, wobei die Überwachungseinrichtung auf die Impedanz programmierbar ist bzw. auf die Impedanz angelernt werden kann. Der durch den Einganssignalstromkreis fließende Strom ist bei einem eingeschalteten Ausgangsignal somit messbar und kann auf Abweichungen gegenüber einem erwarteten Wert hin verglichen werden. Bei einer Abweichungen des gemessenen Stroms gegenüber einem erwarteten, d.h. auf der bekannten Impedanz basierenden Wert, kann die Überwachungseinrichtung auf einen Fehler in der Verdrahtung oder im Eingang des Sicherheitsrelais schließen. Die Überwachungseinrichtung kann ferner Mittel umfassen, die auch eine Leitungsüberwachung bei einem abgeschalteten Eingangssignalsstromkreis sowie eine Erdschlussüberwachung ermöglicht. Die digitalen Signalausgänge können des Weitern testbar ausgeführt sein, so dass ihre Funktionsfähigkeit zum Beispiel mit Hilfe von Testimpulsen überwacht werden kann.

Das Sicherheitsrelais umfasst ferner wenigstens zwei Lastausgänge, eine Diagnoseeinrichtung sowie eine Meldeeinrichtung. Die beiden Lastausgänge bilden einen Laststromkreis zum Anschließen eines Aktors, der eine elektrische Last sein kann. Die Lastausgänge sind mit der Diagnoseeinrichtung verbunden, die zur Überwachung von Fehlern im Laststromkreis und/oder im Sicherheitsrelais ausgebildet ist. Die Meldeeinrichtung ist mit den Signaleingängen des Sicherheitsrelais verbunden.

Der Laststromkreis ist durch wenigstens zwei parallel geschaltete, ansteuerbare Schaltelemente schaltbar, wobei das Einschalten und das Ausschalten des Laststromkreises in Abhängigkeit eines am Eingangssignalstromkreis anliegenden Ansteuersignals erfolgt.

Die Meldeeinrichtung ist dazu ausgebildet, für den Eingangssignalstromkreis eine Impedanz bereitzustellen, die im fehlerfreien Zustand auf die Steuereinrichtung abgestimmt ist. Dies bedeutet, dass die Impedanz im fehlerfreien Zustand des Sicherheitsrelais dem in der Steuereinrichtung programmierten Wert entspricht.

Bei Erkennen eines Fehlers ist die Impedanz der Meldeeinrichtung derart verstimmbar, dass durch die verstimmte Impedanz der erkannte Fehler über den Eingangssignalstromkreis an die Steuereinrichtung signalisierbar ist.

Das sicherheitsgerichteten Kommunikationssystem ermöglich der Steuereinrichtung eine vollständige Überwachung einer sicherheitsgerichteten Signalkette, die eine Steuereinrichtung, ein Sicherheitsrelais und einen Aktor umfassen kann. Ein besonderer Vorteil dieses Systems ist, dass ein im Sicherheitsrelais bzw. im Laststromkreis erkannter Fehler über den vorhandenen Einganssignalstromkreis an die Steuereinrichtung signalisiert werden kann. Eine separate sicherheitsgerichtete Verdrahtung für eine Signalisierung eines Fehlers ist nicht erforderlich.

In bevorzugter Ausgestaltung der Erfindung kann das Sicherheitsrelais ein Weitbereichsnetzteil umfassen, dass aus einer Versorgungsspannung für den Laststromkreis eine Hilfsenergie für die Meldeeinrichtung, die Diagnoseeinrichtung sowie für eine interne Steuerlogik des Sicherheitsrelais gewinnt.

Somit ist kein externes Hilfsenergienetzteil zur Versorgung der internen Elektronik des Sicherheitsrelais erforderlich. Der Laststromkreis kann bedarfsweise mit einer Gleich- oder Wechselspannung zum Beispiel im Bereich zwischen 20 V und 250 V betreiben werden, wobei die interne Elektronik somit mittelbar aus der gleichen Quelle wie der angeschlossene Aktor versorgt werden kann.

Die Diagnoseeinrichtung zur Überwachung von Fehlern im Laststromkreis und/oder im Sicherheitsrelais kann dazu ausgebildet sein, eine für den Laststromkreis bereitgestellte Versorgungsspannung zu überwachen.

Die Diagnoseeinrichtung kann ferner dazu ausgebildet, einen Messstrom in den Laststromkreis einzuprägen und den abgeschalteten Laststromkreis auf einen Leitungsschluss und/oder einen Leitungsbruch zu überwachen.

Des Weiteren kann das Sicherheitsrelais einen Messfühler zum Erfassen des Stromes im Laststromkreis aufweisen, der bevorzugt mit der Diagnoseeinrichtung in Verbindung steht. Der Messfühler kann dazu ausgebildet sein, den eingeschalteten Laststromkreis auf zu hohe, zu niedrige Ströme und/oder einen falschen Phasenwinkel hin zu überwachen.

Als Messfühler ist eine Kombination aus einem Shunt-Sensor und/oder einen Hall-Sensor besonders geeignet, um einen möglichst weiten Messbereich abzudecken.

Die Diagnoseeinrichtung kann dazu ausgebildet sein, eine Hochfrequenz-Messspannung zwischen Laststromkreis und einem Erdpotential einzukoppeln und den Laststromkreis auf einen Erdschluss hin zu überwachen.

Ferner kann die Diagnoseeinrichtung dazu ausgebildet ist, bei abgeschaltetem Laststromkreis die parallel geschalteten Schaltelemente zu testen und in Abhängigkeit des Testergebnisses einen Fehler zu erkennen.

Das Sicherheitsrelais zum sicheren Einschalten eines Aktors ist testbar und damit sicherheitsgerichtet ausgeführt und stellt eine vollständige Leitungs-, Last- und Erdschlussüberwachung für den Laststromkreis bereit.

In Abhängigkeit der möglichen Überwachungsergebnisse kann die Diagnoseeinrichtung jeweils einen Fehler erkennen, der mit Hilfe der verstimmbaren Impedanz in der Meldeeinrichtung an die Steuereinrichtung signalisierbar ist.

Die Meldeeinrichtung kann ein Netzwerk aus zuschaltbaren Widerständen und/oder Induktivitäten und/oder Kapazitäten und/oder einem zuschaltbaren Erdpotential umfassen.

Dies ermöglicht in besonders vorteilhafter Weise, dass ein erkannter Fehler im Laststromkreis in der Meldeeinrichtung und damit im Eingangssignalsstromkreis entsprechend nachgebildet wird. Somit ist neben dem Vorliegen eines Fehlers im Laststromkreis auch die Art des jeweiligen Fehlers an die Steuereinrichtung signalisierbar.

Die Erfindung wird nachfolgend anhand einer beispielhaften Ausführungsform unter Bezugnahme der beigefügten Zeichnungen detailliert beschrieben. In den Zeichnungen zeigen:
- Fig. 1:: eine Steuereinrichtung mit einer über ein Sicherheitsrelais ansteuerbaren Last und mit einer Meldeeinrichtung im Sicherheitsrelais zur Signalisierung eines Fehlers im Laststromkreis;
- Fig. 2:: ein Prinzipschaltbild einer Erdschlussüberwachung.

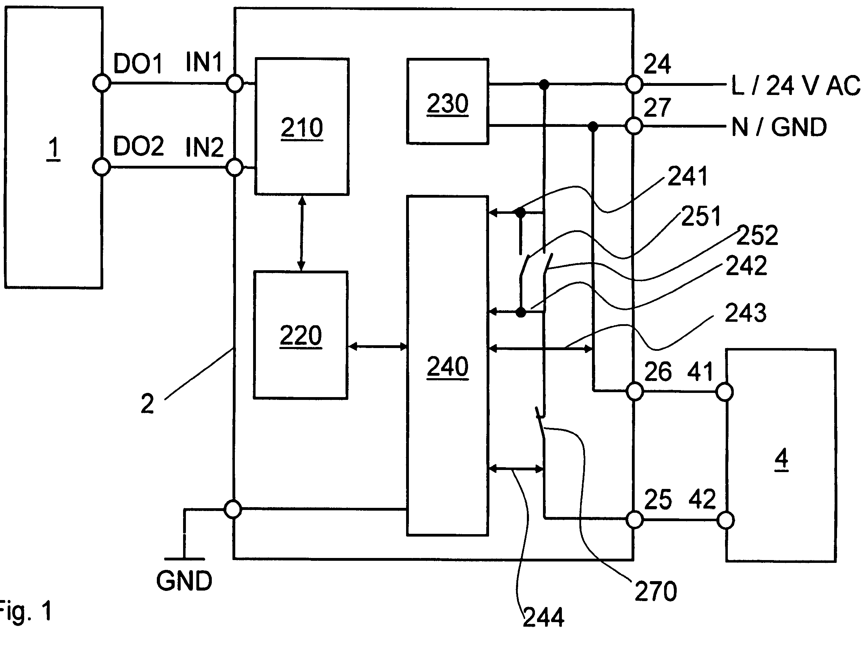

In der Figur 1 ist eine Schaltungsanordnung mit einem durch eine Steuereinrichtung 1 ansteuerbaren Aktor 4 gezeigt, der auf eine entsprechende Sicherheitsanforderung hin aktiv eine sicherheitsgerichtete Funktion zuverlässig ausführen können muss. Ein solcher Aktor 4 stellt schaltungstechnisch eine elektrische Last mit einer bestimmten Impedanz dar. In der Automatisierungstechnik ist eine Steuereinrichtung 1 üblich als speicherprogrammierbare Steuerung (SPS, *im englischen Programmable Logic Controller (PLC)*) ausgeführt, die beispielhaft einen digitalen Signalausgang mit den Anschlüssen DO1 und DO2 aufweist, über die ein jeweiliger Aktor 4 ansteuerbar verbunden ist. Der maximal mögliche Strom, der als Ansteuersignal am digitalen Signalausgang DO1 und DO2 bereitgestellt werden kann, ist aufgrund der begrenzten Treiberfähigkeit einer Steuereinrichtung 1 nicht direkt zum Betreiben der elektrischen Last des Aktors 4 geeignet.

Mit dem Sicherheitsrelais 2 wird der Ausgangsstromkreis für das Ansteuersignal aus der Steuereinrichtung 1 von dem Laststromkreis des Aktors 4 galvanisch getrennt. Die Anschlüsse DO1 und DO2 des digitalen Signalausgangs bilden den Signalausgangstromkreis zum Ansteuern des Sicherheitsrelais und sind jeweils mit einer der beiden Eingangsklemmen IN1 und IN2 verbunden.

Die Steuereinrichtung 1 umfasst eine interne, in der Figur 1 nicht dargestellte Überwachungseinrichtung, die mit den beiden Anschlüssen DO1 und DO2 in Verbindung steht. Die Überwachungseinrichtung kann dazu ausgebildet sein, den Eingangssignalstromkreis auf Fehler in der Verdrahtung oder auf Fehler im Eingangsbereich des Sicherheitsrelais zu überwachen.

Die Signaleingänge IN1 und IN2 sind im Sicherheitsrelais 2 intern auf eine Meldeinrichtung 210 geführt. Die Meldeeinrichtung 210 steht wechselseitig mit der Steuerlogik 220 in Verbindung und stellt den Eingangssignalstromkreis für eine durch die Steuerlogik 220 variierbare Impedanz bereit.

Ein durch das Sicherheitsrelais 2 schaltbarer Laststromkreis zum anschließenden Aktor 4 wird an den Lastausgängen 25 und 26 bereitgestellt, wobei die Betriebsspannung für den Laststromkreis über den spannungsführenden Anschluss 24 für eine Gleich- oder Wechselspannung und den Bezugspotentialanschluss 27 bereitgestellt wird. Der von dem spannungsführenden Anschluss 24 auf den Lastausgang 26 geführte Strompfad ist durch wenigstens zwei parallel geschaltete Schaltelemente 251 und 252 ein- und ausschaltbar. Je nach Sicherheitsanforderung können auch drei oder mehr parallel geschaltete Schaltelemente an dieser Stelle vorgesehen sein.

Der Bezugspotentialanschluss 27 ist über einen internen Strompfad im Sicherheitsrelais 2 direkt mit dem Lastausgang 26 verbunden. Die parallel geschalteten Schaltelemente 251 und 252 werden durch die Steuerlogik 220 in Abhängigkeit eines Ansteuersignals redundant angesteuert, das von der Meldeeinrichtung 210 am Eingangssignalstromkreis des Sicherheitsrelais empfangen wird. Die parallel geschalteten Schaltelemente können über getrennte Kanäle von der Steuerlogik 220 angesteuert werden.

Das Sicherheitsrelais 2 beinhaltet eine Diagnoseeinrichtung 240, die zur Überwachung des Laststromkreises ausgebildet ist und insbesondere Verdrahtungsfehler und Fehler im Eingangsbereich des angeschlossenen Aktors 4 erkennen kann. Die Diagnoseeinrichtung 240 verfügt unter Anderem über einen ersten und zweiten Diagnoseanschluss 243 und 244, die mit jeweils einem der beiden Lastausgänge 25 und 26 verbunden sind.

Bei geöffneten Schaltelementen 251 und 252, d.h. bei einem abgeschalteten Aktor 4 kann über den ersten und zweiten Diagnoseanschluss 243 und 244 ein Messstrom in den Laststromkreis eingeprägt werden, der wesentlich unterhalb des zum Ansprechen des Aktors 4 notwendigen Schwellenwertes liegt. Anhand der eingeprägten sowie der gemessenen Ströme und Spannungen ist die Diagnoseeinrichtung befähigt, einen möglichen Leitungsbruch und/oder mögliche Kurzschlüsse im Laststromkreis zu erkennen.

Bei einem über die geschlossenen parallelen Schaltelemente 251 und 251 eingeschalteten Aktor 4, wird der durch den Laststromkreis fließende Strom mit Hilfe wenigstens eines Messfühlers erfasst, der mit Diagnoseeinrichtung 240 in Verbindung steht. Der in der Figur 1 nicht dargestellte Messfühler, kann in zumindest einem der Strompfade zwischen den Anschlüssen 24 und 25 der und den Anschlüssen 27 und 26 angeordnet sein. Um einen großen Messbereich für den Strom zu erreichen, kommt eine Kombination umfassend einen Shunt und einen Hall-Sensor als Messfühler in Betracht. Mit der Diagnoseeinrichtung 240 kann in Abhängigkeit der anliegenden Betriebsspannung und einer angelernten bzw. programmierten Impedanz des Aktors den Strom durch den Laststromkreis überprüft werden, so dass bei einem zu hohen oder einem zu geringen gemessenen Strom oder bei einer Abweichung des Phasenwinkels bei einer Wechselstrom betriebenen Last ein Fehler im Laststromkreis erkennbar ist.

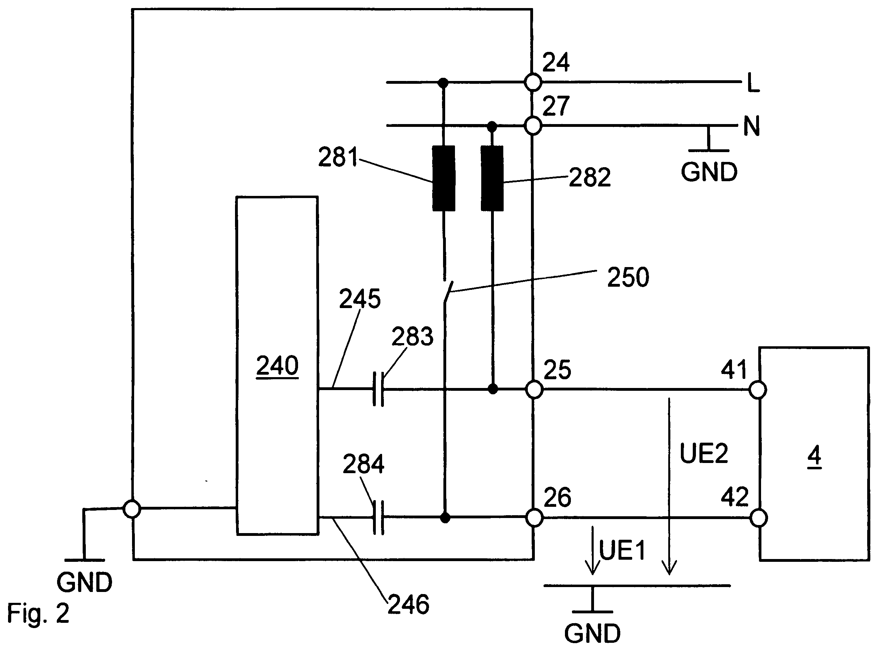

Die Diagnoseeinrichtung 240 umfasst einen dritten und einen vierten Diagnoseanschluss 245 und 246, die für eine in der Figur 2 dargestellten Erdschlussüberwachung dienen. Diese sind über jeweils einen Entkopplungskondensator mit den Lastausgängen 25 und 26 verbunden, so dass ein Hochfrequenz-Messsignal in den Laststromkreis eingekoppelt werden kann. Die beiden Induktivitäten 285 und 286 in den Strompfaden zwischen den Anschüssen 24 und 27 sowie den Anschlüssen 25 und 26 dienen zur Entkopplung des Hochfrequenz-Messsignals gegenüber der Betriebsspannung. Tritt an einer oder an beiden Verdrahtungsleitungen des Laststromkreises, d.h. zwischen den Anschlüssen 26 und 41 bzw. 25 und 42, ein Erdschluss auf, so fließt der Strom des Hochfrequenz-Messsignals über die Fehlerstelle und den Erdungsanschluss GND des Sicherheitsrelais 2 in die Diagnoseeinrichtung 240 zurück.

Wie ferner aus der Figur 1 zu entnehmen ist, umfasst der durch die parallelen Schaltelemente 251 und 252 schaltbare Strompfad zwischen dem spannungsführenden Anschluss 24 und der Ausgangsklemme 25 einen zusätzlichen schaltbaren Öffnerkontakt 270, der eine Überprüfbarkeit der wenigsten zwei parallel geschalteten Schaltelemente 251 und 252 mit Hilfe einer Testprozedur ermöglicht. Diese Testprozedur kann im Falle eines abgeschalteten Laststromkreises in zyklischen Intervallen durchgeführt werden. Zu Beginn der Testprozedur wird der Öffnerkontakt 270 mit einem Signal aus der Steuerlogik 220 zunächst geöffnet. In einem weiteren Schritt werden die parallel geschalteten redundanten Schaltelemente 251 und 252 einzeln nacheinander durch die Steuerlogik 220 angesteuert und für einen kurzen definierten Zeitabschnitt geschlossen. Über die beiden Diagnoseeingänge 241 und 242 werden die Spannungen vor und hinter den Schaltelementen 251 und 252 durch die Diagnoseeinrichtung 240 erfasst und festgestellt, ob das jeweilig angesteuerte Schaltelement 251 oder 252 funktionsfähig ist, d.h. ob dieses entsprechend niederohmig durchschaltet oder nicht. Nach dem Testen aller redundanten Schaltelemente wird der Öffnerkontakt 270 geschlossen. Die Funktion des geschlossenen Öffners kann zum Beispiel durch die Diagnoseeinrichtung 240 mit der zuvor beschriebenen Leitungsbruchüberwachung anschließend geprüft werden.

Erkennt die Diagnoseeinrichtung 240 einen Fehler in dem Laststromkreis und/oder einen Fehler einem der redundanten Schaltelemente so wird dieser Fehler signalisiert und an die Steuerungseinrichtung 1 übermittelt.

Die Übermittlung eines erkannten Fehlers erfolgt über die Meldeeinrichtung 210 und somit über den Eingangssignalstromkreis des Sicherheitsrelais 2.

Die Meldeeinrichtung 210 stellt zwischen den beiden Signaleingängen IN1 und IN2 ein Schaltungsnetzwerk mit verschiedenen Impedanzen bereit, dass durch die Steuerlogik 220 ansteuerbar und gezielt variierbar ist. Im fehlerfreien Fall ist die Impedanz auf den digitalen Signalausgang mit den Anschlüssen DO1 und DO2 derart abgestimmt, dass die Steuerungseinrichtung 1 bei der Überwachung des Eingangssignalstromkreises eine erwartete, d.h. eine programmierte oder angelernte Impedanz erkennt und somit im Eingang des Sicherheitsrelais 2 einen fehlerfreien Zustand erkennt.

Erkennt die Diagnoseeinrichtung 240 einen Fehler im Laststromkreis oder im Sicherheitsrelais 2, so kann die Impedanz der Meldeeinrichtung 210 durch die Steuerlogik 220 entsprechend verstimmt werden, so dass durch die Überwachung des Eingangssignalstromkreises ebenfalls ein Fehler durch die Steuerungseinrichtung 1 erkannt wird.

Das Schaltungsnetzwerk in der Meldeeinrichtung 210 kann in insbesondere in Abhängigkeit eines jeweiligen erkannten Fehlers den Eingangssignalstromkreis niederohmig, hochohmig, kapazitiv, induktiv oder gegen Erdpotential schalten.

Die für die Steuerlogik 220, die Diagnoseeinrichtung 240 und die zur Ansteuerung des Schaltelementes 250 notwendige Hilfsenergie wird über eine Weitbereichsnetzteil 230 aus der für den Laststromkreis vorgesehenen Betriebsspannung gewonnnen. Das Weitbereichsnetzteil 230 kann beispielsweise eingangsseitig sowohl mit einer Gleich-, als auch mit einer Wechselspannung zwischen 20,4 V und 253 V betrieben werden und stellt Ausgangsseitig z.B. eine 24 V Gleichspannung bereit.

Das Schaltungsnetzwerk in der Meldeeinrichtung 210 ist derart konfiguriert, dass bei einer nicht ausreichenden Hilfsspannung und einer damit nicht betriebsbereiten Steuerlogik 220 zwangsweise ein Fehler an die Steuereinrichtung 1 übermittelt wird. Ferner ist die Diagnoseeinrichtung 240 dazu ausgebildet, die Betriebsspannung für den Laststromkreis zu überwachen und bei einer Abweichung einen Fehler über die Steuerlogik 220 und die Meldeeinrichtung 210 an die Steuereinrichtung 1 zu übermitteln.

Durch die variierbare Impedanz in der Meldeeinrichtung 210 können Fehler, die durch die Diagnoseeinrichtung 240 in dem Laststromkreis erkannt werden, am Eingangssignalstromkreis des Sicherheitsrelais 2 entsprechend nachgebildet werden. Die Steuereinrichtung 1 erkennt bei der Überwachung des Eingangssignalstromkreises über die beiden Anschlüsse des digitalen Signalausgangs DO1 und DO2 somit ebenfalls einen entsprechenden Fehler.

Mit der Meldeeinrichtung 210 wird ein Kommunikationssystem für die Steuereinrichtung 1 und das Sicherheitsrelais 2 bereitgestellt, das eine sicherheitsgerichtete bidirektionalen Kommunikation zwischen diesen beiden Teilnehmern ermöglicht. Das Sicherheitsrelais 2 inklusive dem Laststromkreis mit einem Aktor 4 vollständig durch die Steuereinrichtung 1 testbar, so dass Fehler im sowohl im Laststromkreis inklusive der zugehörigen Betriebsspannung, als auch innerhalb des Sicherheitsrelais 2 erkennbar sind. Im Fehlerfall nimmt die Steuereinrichtung 1 einen sicheren Zustand ein.

## Patentansprüche

1. Sicherheitsgerichtetes Kommunikationssystem umfassend wenigstens ein Sicherheitsrelais (2), das mit wenigstens zwei Signaleingänge (IN1, IN2) eines Eingangssignalstromkreises an einer Steuereinrichtung (1) angeschlossen ist, wobei die Steuereinrichtung (1) zum Überwachen des Eingangssignalstromkreises ausgebildet ist,
wobei das Sicherheitsrelais (2) weiter aufweist:
wenigstens zwei Lastausgänge (25, 26) eines Laststromkreises zum Anschließen einer Last (4),
wobei der Laststromkreis durch wenigstens zwei parallel geschaltete, ansteuerbare Schaltelemente (251, 252) schaltbar ist, wobei in Abhängigkeit eines Ansteuersignals am Eingangssignalstromkreis der Laststromkreis ein- oder ausschaltbar ist,
eine Diagnoseeinrichtung (230) zur Überwachung von Fehlern im Laststromkreis und/oder im Sicherheitsrelais (2), und
eine Meldeeinrichtung (210), die mit den Signaleingängen (IN1, IN2) verbunden und dazu ausgebildet ist, für den Eingangssignalstromkreis eine Impedanz bereitzustellen, die im fehlerfreien Zustand auf die Steuereinrichtung abgestimmt ist, und
die bei Erkennen eines Fehlers derart verstimmbar ist, dass durch die verstimmte Impedanz der erkannte Fehler über den Eingangssignalstromkreis an die Steuereinrichtung (1) signalisierbar ist.

2. Sicherheitsgerichtetes Kommunikationssystem gemäß vorstehendem Anspruch, **dadurch gekennzeichnet, dass** das Sicherheitsrelais (2) ein Weitbereichsnetzteil (230) umfasst, dass aus einer Versorgungsspannung für den Laststromkreis eine Hilfsenergie für die Meldeeinrichtung (210), die Diagnoseeinrichtung (230) sowie für eine interne Steuerlogik (220) des Sicherheitsrelais (2) gewinnt.

3. Sicherheitsgerichtetes Kommunikationssystem gemäß einem der Ansprüche 1 oder 2, **dadurch gekennzeichnet, dass** die Diagnoseeinrichtung (230) dazu ausgebildet ist, eine für den Laststromkreis bereitgestellte Versorgungsspannung zu überwachen und bei nicht ausreichend hoher Versorgungsspannung einen Fehler zu erkennen.

4. Sicherheitsgerichtetes Kommunikationssystem gemäß einem der Ansprüche 1 bis 3, **dadurch gekennzeichnet, dass** die Diagnoseeinrichtung (230) dazu ausgebildet ist, einen Messstrom in den Laststromkreis einzuprägen und den abgeschalteten Laststromkreis auf einen Leitungsschluss und/oder einen Leitungsbruch zu überwachen und in Abhängigkeit des Überwachungsergebnisses einen Fehler zu erkennen.

5. Sicherheitsgerichtetes Kommunikationssystem gemäß einem der Ansprüche 1 bis 4, **dadurch gekennzeichnet, dass** das Sicherheitsrelais (2) einen Messfühler zum Erfassen des Stromes im Laststromkreis umfasst, wobei der Messfühler mit der Diagnoseeinrichtung in Verbindung steht und dazu ausgebildet ist, den eingeschalteten Laststromkreis auf zu hohe und zu niedrige Ströme und falsche Phasenwinkel zu überwachen und in Abhängigkeit des Überwachungsergebnisses einen Fehler zu erkennen.

6. Sicherheitsgerichtetes Kommunikationssystem gemäß Anspruch 5, **dadurch gekennzeichnet, dass** der Messfühler einen Shunt-Sensor und/oder einen Hall-Sensor umfasst.

7. Sicherheitsgerichtetes Kommunikationssystem gemäß einem der Ansprüche 1 bis 6, **dadurch gekennzeichnet, dass** die Diagnoseeinrichtung (230) dazu ausgebildet ist, eine Hochfrequenz-Messspannung zwischen Laststromkreis und einem Erdpotential einzukoppeln und den Laststromkreis auf einen Erdschluss hin zu überwachen und in Abhängigkeit des Überwachungsergebnisses einen Fehler zu erkennen.

8. Sicherheitsgerichtetes Kommunikationssystem gemäß einem der Ansprüche 1 bis 7 **dadurch gekennzeichnet, dass** die Diagnoseeinrichtung dazu ausgebildet ist, bei abgeschalteten Laststromkreis die parallel geschalteten ansteuerbaren Schaltelemente zu testen und in Abhängigkeit des Testergebnisses einen Fehler zu erkennen.

9. Sicherheitsgerichtetes Kommunikationssystem gemäß einem der Ansprüche 1 bis 8, **dadurch gekennzeichnet, dass** die Meldeeinrichtung (210) ein Netzwerk aus zuschaltbaren Widerständen und/oder Induktivitäten und/oder Kapazitäten und/oder einem zuschaltbaren Erdpotential umfasst.

10. Sicherheitsrelais zum Einsatz in ein sicherheitsgerichtetes Kommunikationssystem gemäß den vorstehenden Ansprüchen 1 bis 9 umfassend wenigstens zwei Signaleingänge (IN1, IN2) eines Eingangsignalstromkreises, die zum Anschließen einer Steuereinrichtung (1) geeignet sind, wobei die Steuereinrichtung (1) zum Überwachen des Eingangssignalstromkreises geeignet ist, wenigstens zwei Lastausgänge (25, 26) eines Laststromkreises, der zum Anschließen einer Last (4) geeignet ist, wobei der Laststromkreis durch redundant ansteuerbare Schaltelemente (250) in Abhängigkeit eines Ansteuersignals am Eingangssignalstromkreis schaltbar ist, und einer Diagnoseeinrichtung (230) zur Überwachung von Fehlern im Laststromkreis und/oder im Sicherheitsrelais (2), und
eine Meldeeinrichtung (210), die mit den Signaleingänge (IN1, IN2) verbunden ist und dazu ausgebildet ist, für den Eingangssignalstromkreis eine Impedanz bereitzustellen, die im fehlerfreien Fall auf die anschließbare Steuereinrichtung abstimmbar ist, und die bei Erkennen eines Fehlers derart verstimmbar ist, dass der erkannte Fehler über den Eingangssignalstromkreis an die anschließbare Steuereinrichtung (1) signalisierbar ist.

11. Sicherheitsrelais gemäß Anspruch 10, **dadurch gekennzeichnet, dass** die Meldeeinrichtung (210) ein Netzwerk aus zuschaltbaren Widerständen und/oder Induktivitäten und/oder Kapazitäten und/oder einem zuschaltbaren Erdpotential umfasst.

## Claims

1. A safety-related communication system, comprising at least one safety relay (2) which is connected, via at least two signal inputs (IN1, IN2) of an input signal current circuit, to a control device (1), the control device (1) being adapted to monitor the input signal current circuit;
wherein said safety relay (2) further comprises:
at least two load outputs (25, 26) of a load current circuit adapted to connect a load (4);
wherein said load current circuit is switchable by at least two controllable switching elements (251, 252) connected in parallel, wherein said load current circuit can be switched on or off in response to a control signal at the input signal current circuit;
a diagnostic device (230) for monitoring faults in the load current circuit and/or in the safety relay (2); and
a signalling device (210) connected to the signal inputs (IN1, IN2) and adapted to provide an impedance for the input signal current circuit, wherein the impedance is tuned to the control device during a fault-free state and is detuneable upon detection of a fault so as to signal the detected fault, by the detuned impedance, to the control device (1) via the input signal current circuit.

2. The safety-related communication system according to the preceding claim, **characterised in that** the safety relay (2) includes a wide-range power supply unit (230) adapted to yield auxiliary energy for the signalling device (210), the diagnostic device (230), and for an internal control logic (220) of the safety relay (2) from a supply voltage of the load current circuit.

3. The safety-related communication system according to claim 1 or 2, **characterised in that** the diagnostic device (230) is adapted to monitor a supply voltage provided for the load current circuit and to detect a fault when the supply voltage is not sufficiently high.

4. The safety-related communication system according to any of claims 1 to 3, **characterised in that** the diagnostic device (230) is adapted to impress a measuring current in the load current circuit and to monitor the load current circuit when switched off for a line short and/or a line break, and to detect a fault based on the result of the monitoring.

5. The safety-related communication system according to any of claims 1 to 4, **characterised in that** the safety relay (2) comprises a measuring sensor for detecting current in the load current circuit, wherein the measuring sensor is in communication with the diagnostic device and is adapted to monitor the load current circuit when switched on for excessive currents and for currents that are too low and for incorrect phase angles, and to detect a fault based on the result of the monitoring.

6. The safety-related communication system according to claim 5, **characterised in that** the measuring sensor comprises a shunt sensor and/or a Hall sensor.

7. The safety-related communication system according to any of claims 1 to 6, **characterised in that** the diagnostic device (230) is adapted to couple a high frequency measuring voltage between the load current circuit and a ground potential and to monitor the load current circuit for a short to ground, and to detect a fault based on the result of the monitoring.

8. The safety-related communication system according to any of claims 1 to 7, **characterised in that** the diagnostic device is adapted to test the controllable switching elements connected in parallel when the load current circuit is switched off, and to detect a fault based on the result of the test.

9. The safety-related communication system according to any of claims 1 to 8, **characterised in that** the signalling device (210) comprises a network of connectable resistors and/or inductors and/or capacitors and/or a connectable ground potential.

10. A safety relay for use in a safety-related communication system according to the preceding claims 1 to 9, comprising:
at least two signal inputs (IN1, IN2) of an input signal current circuit, which are adapted for being connected to a control device (1), wherein the control device (1) is adapted to monitor the input signal current circuit;
at least two load outputs (25, 26) of a load current circuit adapted to connect a load (4), wherein the load current circuit is switchable by redundantly controllable switching elements (251, 252) in response to a control signal at the input signal current circuit; and
a diagnostic device (230) for monitoring faults in the load current circuit and/or in the safety relay (2); and
a signalling device (210) connected to the signal inputs (IN1, IN2) and adapted to provide an impedance for the input signal current circuit, wherein the impedance is tuneable to the connectable control device in a fault-free state and is detuneable upon detection of a fault so as to signal the detected fault to the control device (1) via the input signal current circuit.

11. The safety relay according to claim 10, **characterised in that** the signalling device (210) comprises a network of connectable resistors and/or inductors and/or capacitors and/or a connectable ground potential.

## Revendications

1. Système de communication orienté sécurité, comprenant au moins un relais de sécurité (2) relié à au moins deux entrées de signal (IN1, IN2) d'un circuit électrique de signal d'entrée sur un dispositif de commande (1), le dispositif de commande (1) étant prévu pour surveiller le circuit électrique de signal d'entrée,
dans lequel le relais de sécurité (2) comporte en outre : au moins deux sorties de charge (25, 26) d'un circuit de courant de charge pour la connexion d'une charge (4), le circuit de courant de charge pouvant être commuté par au moins deux éléments de commutation (251, 252) excitables montés en parallèle, le circuit de courant de charge étant activable ou désactivable en fonction d'un signal de commande sur le circuit électrique de signal d'entrée, un dispositif de diagnostic (230) pour la surveillance d'erreurs dans le circuit de courant de charge et/ou dans le relais de sécurité (2), et un dispositif de signalisation (210) relié aux entrées de signal (IN1, IN2) et prévu pour préparer une impédance pour le circuit électrique de signal d'entrée, laquelle est adaptée au dispositif de commande en état exempt d'erreur, et peut, en cas de détection d'une erreur, être désaccordée de telle manière que l'erreur détectée peut être signalée au dispositif de commande (1) par le désaccord d'impédance, via le circuit électrique de signal d'entrée.

2. Système de communication orienté sécurité selon la revendication précédente, **caractérisé en ce que** le relais de sécurité (2) comprend un bloc d'alimentation à large spectre (230), lequel génère à partir d'une tension d'alimentation pour le circuit de courant de charge un courant de secours pour le dispositif de signalisation (210), le dispositif de diagnostic (230) ainsi que pour une logique de commande (220) interne du relais de sécurité (2).

3. Système de communication orienté sécurité selon la revendication 1 ou 2, **caractérisé en ce que** le dispositif de diagnostic (230) est prévu pour surveiller une tension d'alimentation préparée pour le circuit de courant de charge et détecter une erreur en cas de tension d'alimentation insuffisamment élevée.

4. Système de communication orienté sécurité selon l'une des revendications 1 à 3, **caractérisé en ce que** le dispositif de diagnostic (230) est prévu pour appliquer un courant de mesure dans le circuit de courant de charge, surveiller la présence d'un court-circuit et/ou d'une rupture de ligne dans le circuit de courant de charge désactivé et détecter une erreur en fonction du résultat de la surveillance.

5. Système de communication orienté sécurité selon l'une des revendications 1 à 4, **caractérisé en ce que** le relais de sécurité (2) comprend un capteur de mesure pour la détermination du courant dans le circuit de courant de charge, le capteur de mesure étant relié au dispositif de diagnostic et étant prévu pour surveiller la présence de courants trop faibles et trop élevés dans le circuit de courant de charge activé, surveiller des angles de phase erronés et détecter une erreur en fonction du résultat de la surveillance.

6. Système de communication orienté sécurité selon la revendication 5, **caractérisé en ce que** le capteur de mesure comprend une résistance shunt et/ou un capteur à effet Hall.

7. Système de communication orienté sécurité selon l'une des revendications 1 à 6, **caractérisé en ce que** le dispositif de diagnostic (230) est prévu pour coupler une tension de mesure à haute fréquence entre le circuit de courant de charge et un potentiel de terre, surveiller la présence d'un défaut à la terre dans le circuit de courant de charge et détecter une erreur en fonction du résultat de la surveillance.

8. Système de communication orienté sécurité selon l'une des revendications 1 à 7, **caractérisé en ce que** le dispositif de diagnostic est prévu pour tester les éléments de commutation excitables montés en parallèle lorsque le circuit de courant de charge est désactivé et détecter une erreur en fonction du résultat du test.

9. Système de communication orienté sécurité selon l'une des revendications 1 à 8, **caractérisé en ce que** le dispositif de signalisation (210) comprend un réseau constitué de résistances et/ou d'inductances et/ou de capacités connectables et/ou d'un potentiel de terre connectable.

10. Relais de sécurité utilisable dans un système de communication orienté sécurité selon les revendications 1 à 9, comprenant au moins deux entrées de signal (IN1, IN2) d'un circuit électrique de signal d'entrée aptes à être reliées à un dispositif de commande (1), le dispositif de commande (1) étant prévu pour la surveillance du circuit électrique de signal d'entrée, au moins deux sorties de charge (25, 26) d'un circuit de courant de charge adapté pour la connexion d'une charge (4), le circuit de courant de charge étant commutable par des éléments de commutation (250) redondants excitables en fonction d'un signal de commande sur le circuit électrique de signal d'entrée, et un dispositif de diagnostic (230) pour la surveillance d'erreurs dans le circuit de courant de charge et/ou le relais de sécurité (2), et un dispositif de signalisation (210) relié aux entrées de signal (IN1, IN2) et prévu pour préparer une impédance pour le circuit électrique de signal d'entrée, laquelle est adaptable au dispositif de commande connectable en état exempt d'erreur, et peut en cas de détection d'une erreur être désaccordée de telle manière que l'erreur détectée peut être signalée au dispositif de commande (1) connectable, via le circuit électrique de signal d'entrée.

11. Relais de sécurité selon la revendication 10, **caractérisé en ce que** le dispositif de signalisation (210) comprend un réseau constitué de résistances et/ou d'inductances et/ou de capacités connectables et/ou d'un potentiel de terre connectable.
